# EUROPEAN PATENT SPECIFICATION

(11) **EP 2 993 875 B1**
(45) Date of publication and mention of the grant of the patent: **03.10.2018**
(21) Application number: 15180893.8
(22) Date of filing: 13.08.2015
(51) Int. Cl.: H04M 1/04, H04M 1/18, H04M 1/725

(54) **COVER DEVICE AND ELECTRONIC DEVICE HAVING THE COVER DEVICE**
ABDECKUNGSVORRICHTUNG UND ELEKTRONISCHE VORRICHTUNG MIT ABDECKUNGSVORRICHTUNG
DISPOSITIF DE COUVERTURE ET DISPOSITIF ÉLECTRONIQUE COMPORTANT LE DISPOSITIF DE COUVERCLE

(30) Priority: 02.09.2014 KR 20140116247
(43) Date of publication of application: 09.03.2016
(73) Proprietor: Samsung Electronics Co., Ltd., Gyeonggi-do 16677 (KR)
(72) Inventor: KIM, Kyu-Nam, Gyeonggi-do 16677 (KR); SEO, Su-Hyeon, Gyeonggi-do 16677 (KR)
(74) Representative: HGF Limited

(56) References cited:
- EP-A1- 1 098 543
- WO-A1-2013/150192

## Description

### TECHNICAL FIELD

The present disclosure relates to a cover device and an electronic device having the cover device.

### BACKGROUND

An electronic device refers to a device that performs a specific function according to a program loaded onto it, such as a home appliance, an electronic note, a Portable Multimedia Player (PMP), a mobile communication terminal, a tablet Personal Computer (PC), a video/audio device, a desktop/laptop computer, and an in-vehicle navigator. For example, these electronic devices may output stored information visually or audibly. As the integration level of electronic devices has increased and ultra-high speed, large-capacity wireless communication has become popular, a single mobile terminal is now equipped with a variety of functions. For example, a communication function, an entertainment function such as gaming, a multimedia function such as audio/video playback, a communication and security function such as mobile banking, a scheduling function, and an electronic wallet function are integrated in one electronic device.

A portable electronic device such as an electronic wallet, a PMP, a mobile communication terminal, or a tablet PC generally includes a flat display device and a battery and is a bar-type, a folder-type, or a slider-type in its exterior. Along with the recent development of electronic communication technology, electronic devices have become so miniaturized that an electronic device wearable on a body part like a wrist or a head has been commercialized.

The recent increasing performance of an electronic device such as a mobile communication terminal makes the electronic device serve as an integrated information terminal. Therefore, personal information such as subscriber identification information, a directory, financial information, and the like is frequently stored in the electronic device. Consequently, every time a new electronic device is purchased, personal information in an old electronic device should be moved to the new one inconveniently.

In this context, a method for storing personal information by detachably inserting an Integrated Circuit (IC) card and moving the personal information easily by removing the IC card and attaching it to another electronic device has been developed.

An IC card containing personal identification information is called a Subscriber Identity Module (SIM) card. In its initial development stage, the SIM card was used simply to identify a communication line subscriber.

However, since 3^{rd} Generation (3G) services started, SIM cards have provided additional functions regarding personal information such as a directory, a traffic card, a credit card, and the like, as well as subscriber identification information.

An electronic device such as a mobile communication terminal may have one or more SIM cards according to subscriber services provided by the electronic device or user convenience. For example, an electronic device has a SIM card mounting unit for accommodating at least two SIM cards (hereinafter, referred to as 'dual SIM cards') for various purposes, for example, in the case where different communication operators exist in a wide area such as Europe or China, a user uses different SIM cards for personal use and business use, or a user wants to use a communication network of a different communication operator according to the user's selection.

The SIM card mounting unit is disposed on the rear surface of the electronic device. To satisfy the afore-described user demands, an electronic device having one SIM card mounting unit and an electronic device having two or more SIM card mounting units are separately provided.

EP1098543 describes an electronic communication device having a body with plural SIM mounting slots.

WO2013/150192 describes a cover with an embedded near field communication, NFC, integrated circuit, IC, card.

In spite of the same electronic devices, one of them may have one SIM card and another may have two SIM cards under circumstances. Thus, a user should purchase an electronic device having one or two SIM cards according to the user' needs.

If a user using an electronic device having one SIM card needs to use another communication network, the user should purchase an additional electronic device.

The above information is presented as background information only to assist with an understanding of the present disclosure. No determination has been made, and no assertion is made, as to whether any of the above might be applicable as prior art with regard to the present disclosure.

### SUMMARY

An aspect of the present disclosure is to address at least the above-mentioned problems and/or disadvantages and to provide at least the advantages described below. Accordingly, an aspect of the present disclosure is to provide a cover device that allows a single electronic device to provide services through one or more Subscriber Identity Module (SIM) cards, and an electronic device having the cover device.

Another aspect of the present disclosure is to provide a cover device that facilitates use of one or more SIM cards by means of a protection cover provided in an electronic device, and an electronic device having the cover device. The invention is set out in the appended claims.

Other aspects, advantages, and salient features of the disclosure will become apparent to those skilled in the art from the following detailed description, which, taken in conjunction with the annexed drawings, discloses exemplary embodiments of the disclosure.

### BRIEF DESCRIPTION OF THE DRAWINGS

The above and other aspects, features and advantages of certain exemplary embodiments of the present disclosure will be more apparent from the following description taken in conjunction with the accompanying drawings, in which:
FIG. 1 is a perspective view illustrating an electronic device according to one of various embodiments of the present disclosure;
FIG. 2 is a perspective view illustrating the electronic device according to the one of the various embodiments of the present disclosure, viewed from another direction;
FIG. 3 is a perspective view illustrating the electronic device according to the one of the various embodiments of the present disclosure, viewed from another direction;
FIG. 4 is a block diagram illustrating the electronic device according to the one of the various embodiments of the present disclosure;
FIG. 5 illustrates a second protection cover according to one of various embodiments of the present disclosure;
FIG. 6 illustrates a second protection cover according to another of the various embodiments of the present disclosure; and
FIG. 7 is a flowchart illustrating an operation for providing a user environment according to one of various embodiments of the present disclosure.

Throughout the drawings, like reference numerals will be understood to refer to like parts, components, and structures.

### DETAILED DESCRIPTION

Various embodiments of the present disclosure are described with reference to the attached drawings. As the present disclosure allows for various changes and numerous embodiments, particular embodiments will be illustrated in the drawings and described in detail. However, the present disclosure is not limited to the specific embodiments and should be construed as including all the changes, equivalents, and/or substitutions included in the scope of the present disclosure. Like reference numerals denote the same components in the drawings.

As used in various embodiments of the present disclosure, terms such as 'includes' or 'may include' refer to the presence of a disclosed corresponding function, operation, or component, and do not limit the presence of one or more additional functions, operations, or components. Also, terms such as 'includes' or 'has' refer to the presence of characteristics, numbers, steps, operations, components, parts, or combinations thereof, and are not intended to exclude one or more additional characteristics, numbers, steps, operations, components, parts or combinations thereof.

As used in various embodiments of the present disclosure, the term 'or' is used to include any and all combinations of terms listed. For example, 'A or B' includes only A, only B, or both A and B.

As used in various embodiments of the present disclosure, terms such as 'first' or 'second' may be used to describe various components, but do not limit such components. For example, the terms do not limit the order and/or the importance of their associated components. Such terms may be used to distinguish one component from another. For example, a first User Equipment (UE) and a second UE are both UEs, but are different UEs. For example, without departing from the scope of the present disclosure, a first component may be called a second component, and likewise, a second component may be called a first component.

If a component is said to be 'connected with' or 'connected to' another component, the component may be directly connected with, or connected to, the other component, or another component may exist in between. On the other hand, if a component is said to be 'directly connected with' or 'directly connected to' another component, it should be understood that no components exist in between.

Terms as used in various embodiments of the present disclosure are used to describe the specific embodiments of the present disclosure, and are not intended to limit the present disclosure. Singular terms are intended to include plural forms, unless the context makes it clear that plural forms are not intended.

Unless defined otherwise, all terms used in the present disclosure, including technical or scientific terms, have meanings that are understood generally by a person having ordinary skill in the art. Ordinary terms that may be defined in a dictionary should be understood to have the meaning consistent with their context, and unless clearly defined in the present disclosure, should not be interpreted to be excessively idealistic or formalistic.

According to various embodiments of the present disclosure, an electronic device may be a device with a function of illuminating a color according to its state or a function of recognizing a gesture or sensing a vital signal. For example, the electronic device may be at least one of a smart phone, a tablet Personal Computer (PC), a mobile phone, a video phone, an e-Book reader, a desktop PC, a laptop PC, a Netbook computer, a Personal Digital Assistant (PDA), a Portable Multimedia Player (PMP), an MP3 player, a mobile medical equipment, a camera, and a wearable device (for example, a Head-Mounted Device (HMD) such as electronic glasses, electronic clothes, an electronic bracelet, an electronic necklace, an electronic Appcessory, an electronic tattoo, or a smart watch).

According to some embodiments, the electronic device may be a smart home appliance with a service light function of illuminating various colors according to its states, a gesture recognition function, or a vital signal sensing function. For example, the smart home appliance may be at least one of a Television (TV), a Digital Versatile Disk (DVD) player, an audio device, a refrigerator, an air conditioner, a vacuum cleaner, an oven, a micro oven, a washer, an air purifier, a set-top box, a TV box (for example, Samsung HomeSync™, Apple TV™, Google TV™, or the like), a game console, an electronic dictionary, an electronic key, a camcorder, an electronic picture frame, and the like.

According to some embodiments, the electronic device may be at least one of a medical device (for example, a Magnetic Resonance Angiography (MRA) device, a Magnetic Resonance Imaging (MRI) device, a Computed Tomography (CT) device, an imaging device, an ultrasonic device, or the like), a navigation device, a Global Positioning System (GPS) receiver, an Event Data Recorder (EDR), a Flight Data Recorder (FDR), an automotive infotainment device, a naval electronic device (for example, a naval navigation device, a gyroscope, a compass, or the like), an avionic electronic device, a security device, an in-vehicle head unit, an industrial or consumer robot, an Automatic Teller Machine (ATM) in a financial facility, a Point Of Sales (POS) device in a shop, and the like.

According to some embodiments, the electronic device may be at least one of furniture, part of a building/structure, an electronic board, an electronic signature receiving device, a projector, and various measuring devices (for example, water, electricity, gas or electro-magnetic wave measuring devices), which include a function of illuminating a color according to a state of the electronic device, a gesture recognition function, or a vital signal sensing function. An electronic device according to various embodiments of the present disclosure may be one or a combination of two or more of the foregoing devices. An electronic device according to various embodiments of the present disclosure may be a flexible device. In addition, it will be apparent to one having ordinary skill in the art that an electronic device according to the present disclosure is not limited to the foregoing devices.

Now, a description will be given of a cover device and an electronic device having the cover device according to various embodiments of the present disclosure with reference to the attached drawings. The term 'user' used in various embodiments of the present disclosure may refer to a person or device using an electronic device (for example, an artificial intelligence electronic device).

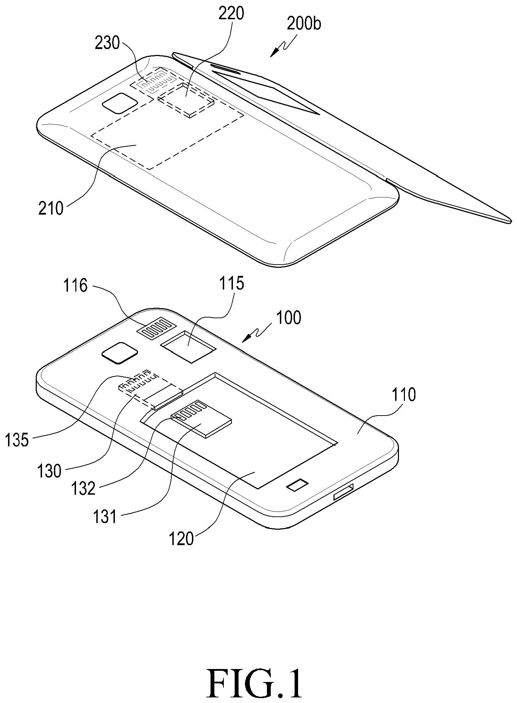

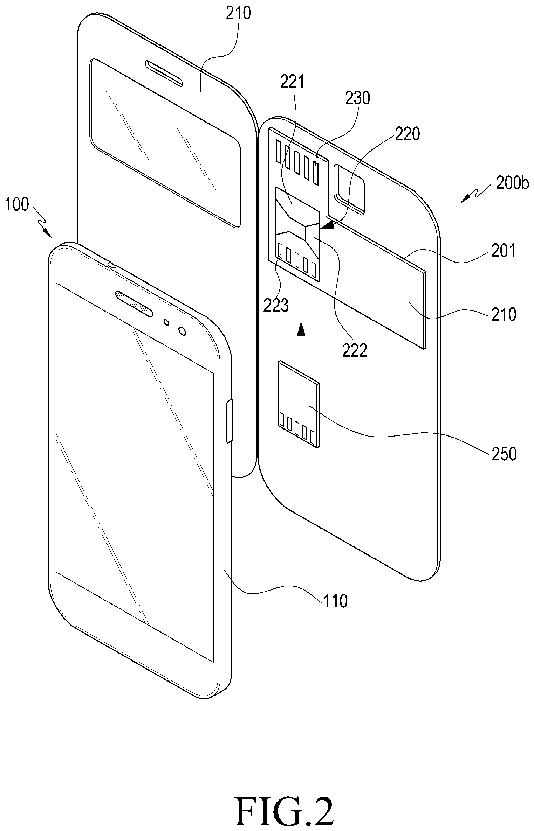

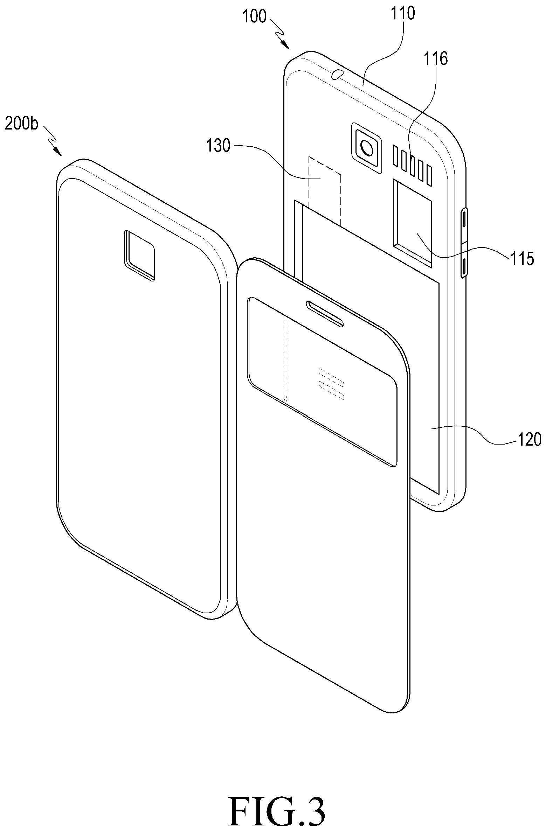

FIG. 1 is a perspective view illustrating an electronic device according to one of various embodiments of the present disclosure, FIG. 2 is a perspective view illustrating the electronic device according to the one of the various embodiments of the present disclosure, viewed from another direction, and FIG. 3 is a perspective view illustrating the electronic device according to the one of the various embodiments of the present disclosure, viewed from another direction.

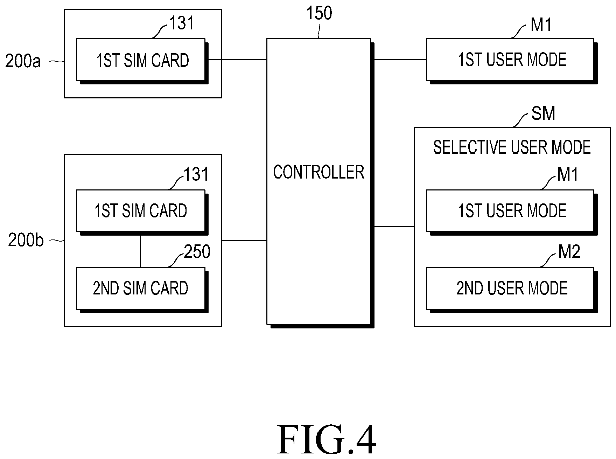

Referring to FIGS. 1, 2, and 3, an electronic device 10 according to one of various embodiments of the present disclosure may include a body 100 and a cover device. The body 100 may include an Input/Output (I/O) unit, an input member, various sensor modules, and a controller (150 in FIG. 4). The I/O unit is a module that is provided on a front surface of the body 100 and outputs a screen according to an input of contact or proximity of an object. If the electronic device 10 is a mobile communication terminal, the I/O unit may include a display panel that displays various images, such as a Liquid Crystal Display (LCD) or an Active Matrix Organic Light Emitting Diode (AMOED) display, and a touch panel that receives a contact input or a proximity input.

The body 100 may be provided, on one surface thereof, specifically on a rear surface thereof, with a rear case 110 having a battery mounting space 120 for accommodating a battery that supplies power to the body 100. Later-described first and second protection covers 200a and 200b are components that cover the rear surface of the body 100. The body 100 may be provided, on the rear surface thereof, specifically in the vicinity of the battery mounting space 120, with a first Subscriber Identity Module (SIM) card mounting unit 130 for accommodating a SIM card that contains personal identification information.

The first SIM card mounting unit 130 may include a mounting space for accommodating a first SIM card 131 and may be connected electrically to an internal circuit board of the body 100. Specifically, the first SIM card mounting unit 130 according to an embodiment of the present disclosure may form the mounting space for accommodating the first SIM card 131, in connection to the battery mounting space 120 and may have a contact circuit unit 135 on an inner surface of the mounting space, for electrical connection to the first SIM card 131. While not shown, the first SIM card mounting unit 130 may be provided in the vicinity of the battery mounting space 120 and may include a first insertion groove having the contact circuit unit 135 for electrically connecting the first SIM card 131 to the inner circuit board, and a first cover unit for covering the first insertion groove.

A contact terminal 116 may be provided at a peripheral portion on the one surface of the body 100, specifically around the first SIM card mounting unit 130, to electrically contact a terminal unit 230 of a second SIM card mounting unit 220 when the later-described second protection cover 200b is engaged with the body 100. The contact terminal 116 may be provided to be electrically connected to the internal circuit board, exposed from a surface of the rear case 110. The contact terminal 116 contacts or does not contact the second SIM card mounting unit 220, specifically the terminal unit 230 electrically connected to the second SIM card mounting unit 220, according to a protection cover attached to or removed from the body 100. The electronic device 10 may provide a user experience of using two SIM cards or a user experience of using one SIM card depending on whether the contact terminal 116 contacts the terminal unit 230.

A mounting groove 115 may be recessed into the surface of the rear case 110, at a peripheral portion of the one surface of the body 100, specifically in the vicinity of the battery mounting space 120. The mounting groove 115 may be formed at a position at which it faces the second SIM card mounting unit 220 provided in the second protection cover 200b, so as to accommodate the second SIM card mounting unit 220 having a predetermined thickness on the inner surface of the second protection cover 200b.

While it has been described by way of example in an embodiment of the present disclosure that the contact terminal 116 is provided in the vicinity of the mounting groove 115, the contact terminal 116 may be positioned on a surface of the mounting groove 115 or apart from the mounting groove 115 according to the position of the terminal unit 230. Thus, it is to be clearly understood that the position of the contact terminal 116 may vary in correspondence with the position of the terminal unit 230.

FIG. 4 is a block diagram illustrating the electronic device according to the one of the various embodiments of the present disclosure.

Referring to FIG. 4, the controller 150 may be provided in the body 100 in order to control the electronic device 10 to operate as a single or dual SIM card product depending on engagement of later-described protection covers with body 100.

If the first protection cover 200a is engaged with the body 100, the controller 150 may control the electronic device 10 to operate as a single SIM card product according to the first SIM card 131 mounted in the first SIM card mounting unit 130. On the other hand, if the second protection cover 200b is engaged with the body 100 compatibly with the first protection cover 200a, the controller 150 may control the electronic device 10 to operate as a dual SIM card product according to the first SIM card 131 mounted in the first SIM card mounting unit 130 and a second SIM card 250 mounted in the second SIM card mounting unit 220. Specifically, if the first protection cover 200a is engaged with the body 100, the controller 150 sets the body 100 to a first user mode M1 based on the first SIM card 131 mounted in the first SIM card mounting unit 130 so that the electronic device 10 may operate as a single SIM card product. If the second protection cover 200b is engaged with the body 100, the controller 150 sets the body 100 to a selective user mode SM in which the first user mode M1 based on the first SIM card 131 mounted in the first SIM card mounting unit 130 or a second user mode M2 based on the second SIM card 250 mounted in the second SIM card mounting unit 220 is selected. Thus, the electronic device 10 may operate as a dual SIM card product.

According to one of various embodiments of the present disclosure, a cover device may be provided in the form of a battery cover detachably engaged with the body 100 to cover only one surface of the body 100, specifically only the rear case 110 provided on the rear surface of the body 100 or in the form of a cover such as a flip cover which is engaged with the rear surface of the body 100, protecting the rear case 110 and which is rotatable with respect to one end of the flip cover in engagement with the rear surface of the body 100. While the following description is given with the appreciation that a protection cover is provided in the form of a flip cover that may protect the front and rear surfaces of the body 100 according to an embodiment of the present disclosure, it is to be clearly understood that the shape or structure of the protection cover may be modified as far as it covers the SIM card mounting unit provided on one surface of the body 100, as described before.

According to one of various embodiments of the present disclosure, protection covers may include the first protection cover 200a and the second protection cover 200b.

The first protection cover 200a may be detachably engaged with the body 100, covering the one surface of the body 100, specifically the rear case 110 having the first SIM card mounting unit 130 or the battery mounting space 120.

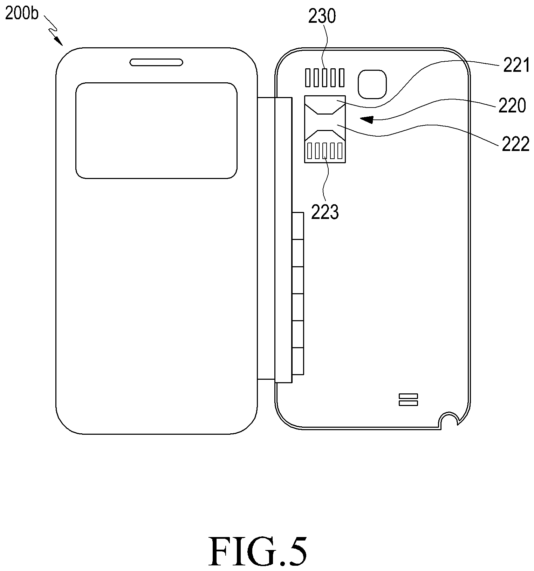

FIG. 5 illustrates a second protection cover according to one of various embodiments of the present disclosure.

Referring to FIG. 5, the second protection cover 200b is compatible with the first protection cover 200a and may include at least one second SIM card mounting unit 220 and at least one terminal unit 230 in its interior. When the second protection cover 200b covers the one surface of the body 100, specifically the rear case 110, the second SIM card mounting unit 220 may be inserted in the mounting groove 115 formed in the rear case 110 and the terminal unit 230 may electrically connect the body 100 to the second SIM card mounting unit 220 by contacting the contact terminal 116 exposed from the surface of the rear case 110.

According one of various embodiments of the present disclosure, the afore-described second SIM card mounting unit 220 and terminal unit 230 may be mounted directly on the inner surface of the second protection cover 200b. That is, the second SIM card mounting unit 220 may be provided on the inner surface of the second protection cover 200b and the terminal unit 230 may be provided on the surface of the second SIM card mounting unit 220 or around the second SIM card mounting unit 220, for electrical connection to the second SIM card mounting unit 220.

Specifically, the second SIM card mounting unit 220 may be provided on the inner surface of the second protection cover 200b and may include a second insertion groove 221 having a correspondence terminal 223 electrically connected to a terminal of the second SIM card 250, and a second cover unit 222 forming a space over the second insertion groove 221, in which the second SIM card 250 is mounted. The terminal unit 230 may be connected electrically to the correspondence terminal 223 and provided in the vicinity of the second SIM card mounting unit 220 or on the surface of the second cover unit 222. For example, if the terminal unit 230 is positioned in the vicinity of the second SIM card mounting unit 220, the contact terminal 116 may be provided at a position corresponding to the terminal unit 230, around the mounting groove 115. On the other hand, if the terminal unit 230 is positioned on the surface of the second protection cover 200b, the contact terminal 116 may be provided at a position corresponding to the terminal unit 230, on the inner surface of the mounting groove 115.

While it has been described above that the second SIM card mounting unit 220 includes the second insertion groove 221 and the second cover unit 222 by way of example, this should not be construed as limiting the present disclosure. For example, the second SIM card mounting unit 220 may include a mounting surface having the correspondence terminal 223, formed on the inner surface of the second protection cover 200b in order to accommodate the second SIM card 250, and the second cover unit 222 forming the mounting space for the second SIM card 250. Or a mounting module having a mounting space in which the second SIM card 250 is mounted may be installed on the inner surface of the second protection cover 200b, and the terminal unit 230 may be mounted on the surface of the mounting module or in the vicinity of the mounting module, in electrical connection to the mounting module. As described before, many changes or modifications may be made to the shapes or structures of the second SIM card mounting unit 220 and the terminal unit 230.

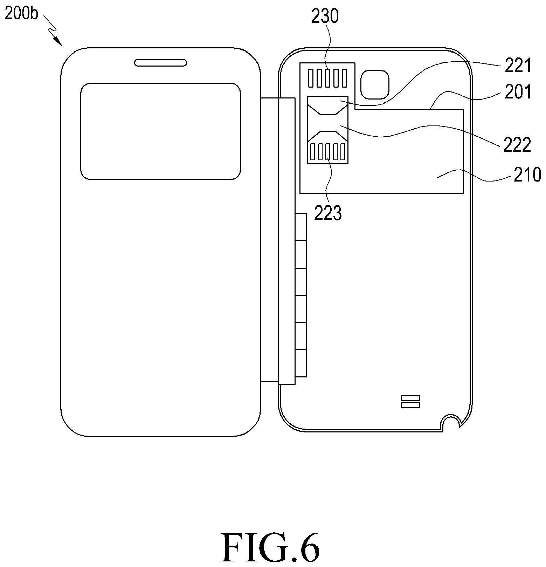

FIG. 6 illustrates a second protection cover according to another of the various embodiments of the present disclosure.

Referring to FIG. 6, a mounting surface may be formed on the inner surface of the second protection cover 200b and a SIM plate 210 having the second SIM card mounting unit 220 and the terminal unit 230 electrically connected to the second SIM card mounting unit 220 may be mounted in the mounting surface according to another of the various embodiments of the present disclosure, compared to the inner surface of the second protection cover 200b according to the foregoing embodiment of the present disclosure.

Specifically, a second mounting surface having the correspondence terminal 223 electrically connected to the terminal of the second SIM card 250 and the second cover unit 222 forming the mounting surface for the second SIM card 250 over the second insertion groove may be provided on the one surface of the SIM card plate 210. The terminal unit 230 may be provided on one surface of the SIM card plate 210 and may be electrically connected to the correspondence terminal 223, in the vicinity of the second SIM card mounting unit 220 or on the surface of the second cover unit 222. For example, if the terminal unit 230 is positioned in the vicinity of the second SIM card mounting unit 220, the contact terminal 116 may be provided at a position corresponding to the terminal unit 230 around the mounting groove 115. On the other hand, if the terminal unit 230 is positioned on the surface of the second cover unit 222, the contact terminal 116 may be provided at a position corresponding to the terminal unit 230 on the inner surface of the mounting groove 115. The SIM card plate 210 having the second SIM card mounting unit 220 and the terminal unit 230 may be engaged with the inner surface of the second protection cover 200b.

According to one of various embodiments of the present disclosure, one second SIM card mounting unit 220 is described as provided in the second protection cover 200b. However, this is purely exemplary. Thus, two or more second SIM card mounting units 220 may be provided on the inner surface of the second protection cover 200b, when needed. Then, the number of terminal units 230 and the number of contact terminals 116 electrically connected to the terminal units 230 may be determined according to the number of second SIM card mounting units 220.

As described before, the second protection cover 200b having the second SIM card mounting unit 220 and the terminal unit 230 may be provided compatibly with the first protection cover 200a, as in the case where the second SIM card mounting unit 220 and the terminal unit 230 are provided directly on the inner surface of the second protection cover 200b or engaged with the inner surface of the second protection cover 200b through the SIM card plate 210. That is, when the first protection cover 200a is engaged with the body 100 according to a user selection, the electronic device 10 may be used as a single SIM card product through the single first SIM card mounting unit 130 provided in the body 100. In other words, since no electrical contact occurs to the contact terminal 116 due to the engagement of the first protection cover 200a, the electronic device 10 may operate as a single SIM card product based on the first SIM card 131 mounted in the first SIM card mounting unit 130. Then, the electronic device 10 may operate only in the first user mode M1 based on the first SIM card 131.

On the other hand, when the second protection cover 200b compatible with the first protection cover 200a is engaged with the body 100 according to a user selection, the electronic device 10 may be used as a dual SIM card product by means of the first SIM card mounting unit 130 provided in the body 100 and the second SIM card mounting unit 220 electrically connected to the body 100 due to engagement of the second protection cover 200b. In other words, since the contact terminal 116 contacts the terminal unit 230 due to the engagement of the second protection cover 200b, the second SIM card mounting unit 220 may be connected electrically to the body 100. Thus, the electronic device 10 may operate as a dual SIM card product through the first SIM card 131 mounted in the first SIM card mounting unit 130 and the second SIM card 250 mounted in the second SIM card mounting unit 220. Accordingly, the electronic device 10 may operate in the first user mode M1 based on the first SIM card 131 or the second user mode M2 based on the second SIM card 250 according to a user selection or a user experience. For example, when the electronic device 10 operates as a dual SIM card product by engagement between the body 100 and the second protection cover 200b, if a user selects the first or second user mode M1 or M2, the electronic device 10 operates in the first or second user mode M1 or M2 until before the user changes the selective user mode SM. Or the selective user mode SM may be configured so that the user may select the first or second user mode M1 or M2 each time the user uses the electronic device 10.

As described above, the electronic device 10 according to the present disclosure may be used as a single or dual SIM card product depending on whether the first protection cover 200a or the second protection cover 200b is engaged.

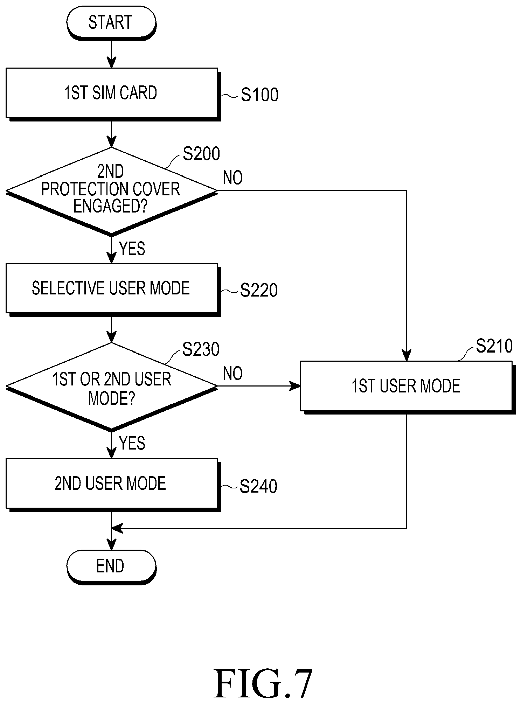

FIG. 7 is a flowchart illustrating an operation for providing a user environment according to one of various embodiments of the present disclosure.

Referring to FIG. 7, in the case where the electronic device 10 is used as a single or dual SIM card product depending on whether the first protection cover 200a or the second protection cover 200b is engaged, a method for providing a user experience (that is, the first or second user mode) will be described below.

The first protection cover 200a or the second protection cover 200b compatible with the first protection cover 200a may be engaged with one surface of the body 100.

When the first protection cover 200a is engaged with the body 100, the body 100 provides a user experience corresponding to the first user mode M1 as the first SIM card mounting unit 130 is provided in the body 100.

On the other hand, when the second protection cover 200b is engaged with the body 100, the body 100 operates selectively in the first user mode M1 based on the first SIM card 131 mounted in the first SIM card mounting unit 130 or in the second user mode M2 based on the second SIM card 250 mounted in the second SIM card mounting unit 220.

If the user selects the first user mode M1, the electronic device 10 may provide a user experience according to the first user mode M1. If the user selects the second user mode M2, the electronic device 10 provides a user experience according to the second user mode M2.

As is apparent from the foregoing description, a cover device and an electronic device having the cover device according to various embodiments of the present disclosure offer the benefit that the electronic device can be used as a single SIM card product in view of installation of a single SIM card mounting unit and can be used as a dual SIM card product according to an engaged protection cover.

In other words, when a user uses a general protection cover, the electronic device can be used as having a single SIM card. When the user replaces the general protection cover with a protection cover having a SIM card mounting unit, the electronic device can be used as a dual SIM card product. Therefore, user convenience can be increased.

Further, the electronic device can provide a single SIM user experience or a dual SIM user experience according to an engaged protection cover.

While the disclosure has been shown and described with reference to certain exemplary embodiments thereof, it will be understood by those skilled in the art that various changes in form and details may be made therein without departing from the scope of the disclosure as defined by the appended claims.

## Claims

1. An electronic device including a cover device comprising:
a protection cover (200b) having a Subscriber Identity Module, SIM, card mounting unit (220) electrically connected to a contact terminal (116) provided on one surface of a body of the electronic device by contacting the contact terminal (116),
wherein the protection cover (200b) has a terminal unit (230) that is electrically connected to the SIM card mounting unit (220) and electrically contacts the contact terminal (116).

2. The electronic device of claim 1, wherein a SIM plate (210) having the SIM card mounting unit (220) and the terminal unit (230) is mounted on the one surface of the protection cover (200b).

3. An electronic device including a cover device comprising:
a body (100) of the electronic device having a first Subscriber Identity Module, SIM, card mounting unit (130) on one surface of the body and at least one contact terminal (116) around the first SIM card mounting unit (130); and
a protection cover (200b) having a second SIM card mounting unit (220) that covers the one surface of the body (100) and is connected electrically to the contact terminal (116) by contacting the contact terminal (116), for accommodating at least one SIM card (250),
wherein the protection cover (200b) has a terminal unit (230) that is electrically connected to the second SIM card mounting unit (220) and electrically contacts the contact terminal (116).

4. The electronic device of claim 3, wherein a mounting surface is provided on an inner surface of the protection cover (200b), for accommodating the second SIM card mounting unit (220) and the terminal unit (230).

5. The electronic device of claim 3, wherein a SIM plate (210) having the second SIM card mounting unit (220) and the terminal unit (230) is mounted on an inner surface of the protection cover (200b).

6. The electronic device of claim 3, further comprising a mounting groove (115) formed into the one surface of the body (100), for accommodating the second SIM card mounting unit (220) when the protection cover (200b) is engaged.

7. The electronic device of claim 3, wherein the body (100) includes a controller (150) for controlling the body (100) to operate in a first user mode based on a first SIM card (131) mounted in the first SIM card mounting unit (130) or a selective user mode based on the first SIM card (131) mounted in the first SIM card mounting unit (130) and a second SIM card (250) mounted in the second SIM card mounting unit (220), depending on whether the protection cover (200b) or another protection cover is engaged with the body.

8. The electronic device of claim 7, wherein, when another protection cover is engaged with the body (100), the controller (150) controls the body to operate in the first user mode based on the first SIM card (131) mounted in the first SIM card mounting unit (130), and
wherein, when the protection cover (200b) is engaged with the body, the controller (150) controls the body to operate in the selective user mode in which either the first user mode based on the first SIM card (131) mounted in the first SIM card mounting unit (130) or a second user mode based on the second SIM card (250) mounted in the second SIM card mounting unit (220) is selected.

9. A method for using an electronic device, the method comprising:
engaging one of a protection cover (200b) and another protection cover with a body (100) of the electronic device having a first Subscriber Identity Module, SIM, card mounting unit (130) on one surface of the body and at least one contact terminal (116) around the first SIM card mounting unit (130), said protection cover (200b) covering the body (100) and having a second SIM card mounting unit (230) in which at least one SIM card (250) is mounted; and
executing a user setting based on the first SIM card mounting unit (130) or a user setting based on the first SIM card mounting unit (130) or the second SIM card mounting unit (220) according to the engaged protection cover or other protection cover.

10. The method of claim 9, wherein the engagement comprises, if the other protection cover is engaged with the body, executing a user setting based on the first SIM card mounting unit (130) by the body.

11. The method of claim 9, wherein the engagement comprises, if the protection cover is engaged with the body, executing a user setting based on the first SIM card mounting unit (130) or a user setting based on the second SIM card mounting unit (220) by the body.

## Patentansprüche

1. Eine elektronische Vorrichtung mit einer Abdeckvorrichtung, umfassend:
eine Schutzabdeckung (200b), bei der eine Teilnehmeridentitätsmodulkarten-Befestigungseinheit (Subscriber Identity Module, SIM-Kartenbefestigungseinheit) (220) elektrisch mit einem auf einer Fläche des Körpers der elektronischen Vorrichtung vorgesehenen Kontaktanschluss (116) verbunden ist, indem sie mit dem Kontaktanschluss (116) in Kontakt steht,
wobei die Schutzabdeckung (200b) eine Anschlusseinheit (230) aufweist, die elektrisch mit der SIM-Kartenbefestigungseinheit (220) verbunden ist und in elektrischem Kontakt mit dem Kontaktanschluss (116) steht.

2. Die elektronische Vorrichtung nach Anspruch 1, wobei eine SIM-Platte (210) mit der SIM-Kartenbefestigungseinheit (220) und der Anschlusseinheit (230) an die eine Fläche der Schutzabdeckung (200b) angebracht wird.

3. Eine elektronische Vorrichtung mit einer Abdeckvorrichtung, umfassend:
einen Körper (100) der elektronischen Vorrichtung mit einer ersten Teilnehmeridentitätsmodulkarten-Befestigungseinheit (Subscriber Identity Module, SIM-Kartenbefestigungseinheit) (130) auf einer Fläche des Körpers und mindestens einem Kontaktanschluss (116) um die erste SIM-Kartenbefestigungseinheit (130); und
eine Schutzabdeckung (200b) mit einer zweiten SIM-Kartenbefestigungseinheit (220), welche die eine Fläche des Körpers (100) abdeckt und elektrisch mit dem Kontaktanschluss (116) verbunden ist, indem sie mit dem Kontaktanschluss (116) in Kontakt steht, zur Aufnahme mindestens einer SIM-Karte (250),
wobei die Schutzabdeckung (200b) eine Anschlusseinheit (230) aufweist, die elektrisch mit der zweiten SIM-Kartenbefestigungseinheit (220) verbunden ist und in elektrischem Kontakt mit dem Kontaktanschluss (116) steht.

4. Die elektronische Vorrichtung nach Anspruch 3, wobei eine Befestigungsfläche an einer Innenfläche der Schutzabdeckung (200b) vorgesehen ist, um die zweite SIM-Kartenbefestigungseinheit (220) und die Anschlusseinheit (230) aufzunehmen.

5. Die elektronische Vorrichtung nach Anspruch 3, wobei eine SIM-Platte (210) mit der zweiten SIM-Kartenbefestigungseinheit (220) und der Anschlusseinheit (230) an eine Innenfläche der Schutzabdeckung (200b) angebracht wird.

6. Die elektronische Vorrichtung nach Anspruch 3, die weiter eine Befestigungsaussparung (115) umfasst, die in der einen Fläche des Körpers (100) gebildet wird, um die zweite SIM-Kartenbefestigungseinheit (220) aufzunehmen, wenn die Schutzabdeckung (200b) in Eingriff steht.

7. Die elektronische Vorrichtung nach Anspruch 3, wobei der Körper (100) eine Steuereinheit (150) zur Steuerung des Körpers (100) für den Betrieb in einem ersten Benutzermodus basierend auf der Anbringung einer ersten SIM-Karte (131) in die erste SIM-Kartenbefestigungseinheit (130) oder einem selektiven Benutzermodus basierend auf der Anbringung der ersten SIM-Karte (131) in die erste SIM-Kartenbefestigungseinheit (130) und der Anbringung einer zweiten SIM-Karte (250) in die zweite SIM-Kartenbefestigungseinheit (220) umfasst, in Abhängigkeit davon, ob die Schutzabdeckung (200b) oder eine andere Schutzabdeckung mit dem Körper in Eingriff steht.

8. Die elektronische Vorrichtung nach Anspruch 7, wobei die Steuereinheit (150) den Körper basierend auf der Anbringung der ersten SIM-Karte (131) in die erste SIM-Kartenbefestigungseinheit (130) für den Betrieb im ersten Benutzermodus steuert, wenn eine andere Schutzabdeckung mit dem Körper (100) in Eingriff steht, und
wobei die Steuereinheit (150) den Körper für den Betrieb in dem selektiven Benutzermodus steuert, in dem entweder der erste Benutzermodus basierend auf der Anbringung der ersten SIM-Karte (131) in die erste SIM-Kartenbefestigungseinheit (130) oder ein zweiter Benutzermodus basierend auf der Anbringung der zweiten SIM-Karte (250) in die zweite SIM-Kartenbefestigungseinheit (220) ausgewählt wird, wenn die Schutzabdeckung (200b) mit dem Körper in Eingriff steht.

9. Ein Verfahren zur Verwendung einer elektronischen Vorrichtung, wobei das Verfahren Folgendes umfasst:
Ineingriffbringen einer Schutzabdeckung (200b) oder einer anderen Schutzabdeckung mit einem Körper (100) der elektronischen Vorrichtung, der eine erste Teilnehmeridentitätsmodulkarten-Befestigungseinheit (Subscriber Identity Module, SIM-Kartenbefestigungseinheit) (130) auf einer Fläche des Körpers und mindestens einen Kontaktanschluss (116) um die erste SIM-Kartenbefestigungseinheit (130) aufweist, wobei die genannte Schutzabdeckung (200b) den Körper (100) abdeckt und eine zweite SIM-Kartenbefestigungseinheit (230) aufweist, an der mindestens eine SIM-Karte (250) angebracht ist; und
Ausführen einer Benutzereinstellung basierend auf der ersten SIM-Kartenbefestigungseinheit (130) oder einer Benutzereinstellung basierend auf der ersten SIM-Kartenbefestigungseinheit (130) oder der zweiten SIM-Kartenbefestigungseinheit (220) entsprechend der in Eingriff gebrachten Schutzabdeckung oder der anderen Schutzabdeckung.

10. Das Verfahren nach Anspruch 9, wobei der Eingriff umfasst, dass eine Benutzereinstellung basierend auf der ersten SIM-Kartenbefestigungseinheit (130) durch den Körper ausgeführt wird, wenn die andere Schutzabdeckung mit dem Körper in Eingriff steht.

11. Das Verfahren nach Anspruch 9, wobei der Eingriff umfasst, dass eine Benutzereinstellung basierend auf der ersten SIM-Kartenbefestigungseinheit (130) oder eine Benutzereinstellung basierend auf der zweiten SIM-Kartenbefestigungseinheit (220) durch den Körper ausgeführt wird, wenn die Schutzabdeckung mit dem Körper in Eingriff steht.

## Revendications

1. Un dispositif électronique comprenant un dispositif de couvercle comprenant :
un couvercle de protection (200b) possédant une unité de montage de carte de module d'identification d'abonné, SIM, (220) raccordée électriquement à une borne de contact (116) placée sur une surface d'un corps du dispositif électronique par la mise en contact de la borne de contact (116),
où le couvercle de protection (200b) possède une unité borne (230) qui est raccordée électriquement à l'unité de montage de carte SIM (220) et entre en contact électriquement avec la borne de contact (116).

2. Le dispositif électronique selon la Revendication 1, où une plaque SIM (210) possédant l'unité de montage de carte SIM (220) et l'unité borne (230) est montée sur ladite surface du couvercle de protection (200b).

3. Un dispositif électronique comprenant un dispositif de couvercle comprenant :
un corps (100) du dispositif électronique possédant une première unité de montage de carte de module d'identification d'abonné, SIM, (130) sur une surface du corps et au moins une borne de contact (116) autour de la première unité de montage de carte SIM (130), et
un couvercle de protection (200b) possédant une deuxième unité de montage de carte SIM (220) qui couvre ladite surface du corps (100) et est raccordée électriquement à la borne de contact (116) par la mise en contact de la borne de contact (116), de façon à loger au moins une carte SIM (250),
où le couvercle de protection (200b) possède une unité borne (230) qui est raccordée électriquement à la deuxième unité de montage de carte SIM (220) et entre en contact électriquement avec la borne de contact (116).

4. Le dispositif électronique selon la Revendication 3, où une surface de montage est placée sur une surface intérieure du couvercle de protection (200b), de façon à loger la deuxième unité de montage de carte SIM (220) et l'unité borne (230).

5. Le dispositif électronique selon la Revendication 3, où une plaque SIM (210) possédant la deuxième unité de montage de carte SIM (220) et l'unité borne (230) est montée sur une surface intérieure du couvercle de protection (200b).

6. Le dispositif électronique selon la Revendication 3, comprenant en outre une rainure de montage (115) formée dans ladite surface du corps (100), de façon à loger la deuxième unité de montage de carte SIM (220) lorsque le couvercle de protection (200b) est mis en prise.

7. Le dispositif électronique selon la Revendication 3, où le corps (100) comprend un dispositif de commande (150) destiné à la commande du corps (100) de façon à fonctionner dans un premier mode d'utilisateur en fonction d'une première carte SIM (131) montée dans la première unité de montage de carte SIM (130) ou un mode d'utilisateur sélectif en fonction de la première carte SIM (131) montée dans la première unité de montage de carte SIM (130) et une deuxième carte SIM (250) montée dans la deuxième unité de montage de carte SIM (220), selon que le couvercle de protection (200b) ou un autre couvercle de protection est mis en prise avec le corps.

8. Le dispositif électronique selon la Revendication 7, où, lorsqu'un autre couvercle de protection est mis en prise avec le corps (100), le dispositif de commande (150) commande le corps de façon à fonctionner dans le premier mode d'utilisateur en fonction de la première carte SIM (131) montée dans la première unité de montage de carte SIM (130), et
où, lorsque le couvercle de protection (200b) est mis en prise avec le corps, le dispositif de commande (150) commande le corps de façon à fonctionner dans le mode d'utilisateur sélectif dans lequel soit le premier mode d'utilisateur en fonction de la première carte SIM (131) montée dans la première unité de montage de carte SIM (130) ou un deuxième mode d'utilisateur en fonction de la deuxième carte SIM (250) montée dans la deuxième unité de montage de carte SIM (220) est sélectionné.

9. Un procédé d'utilisation d'un dispositif électronique, le procédé comprenant :
la mise en prise d'un couvercle parmi un couvercle de protection (200b) et un autre couvercle de protection avec un corps (100) du dispositif électronique possédant une première unité de montage de carte de module d'identification d'abonné, SIM, (130) sur une surface du corps et au moins une borne de contact (116) autour de la première unité de montage de carte SIM (130), ledit couvercle de protection (200b) couvrant le corps (100) et possédant une deuxième unité de montage de carte SIM (230) dans laquelle au moins une carte SIM (250) est montée, et
l'exécution d'un réglage d'utilisateur en fonction de la première unité de montage de carte SIM (130) ou d'un réglage d'utilisateur en fonction de la première unité de montage de carte SIM (130) ou de la deuxième unité de montage de carte SIM (220) en fonction du couvercle de protection ou d'un autre couvercle de protection mis en prise.

10. Le procédé selon la Revendication 9, où la mise en prise comprend, si l'autre couvercle de protection est mis en prise avec le corps, l'exécution d'un réglage d'utilisateur en fonction de la première unité de montage de carte SIM (130) par le corps.

11. Le procédé selon la Revendication 9, où la mise en prise comprend, si le couvercle de protection est mis en prise avec le corps, l'exécution d'un réglage d'utilisateur en fonction de la première unité de montage de carte SIM (130) ou d'un réglage d'utilisateur en fonction de la deuxième unité de montage de carte SIM (220) par le corps.
